# EUROPÄISCHE PATENTSCHRIFT

(11) **EP 1 266 791 B1**
(45) Veröffentlichungstag und Bekanntmachung des Hinweises auf die Patenterteilung: **16.11.2005**
(21) Anmeldenummer: 02009526.1
(22) Anmeldetag: 26.04.2002
(51) Int. Cl.: B60N 2/24, B60N 2/68

(54) **Fahrgastsitz für ein Personenbeförderungsfahrzeug**
Passenger seat for public transport vehicles
Siège de passager pour véhicules de transport en commun

(30) Priorität: 12.06.2001 DE 10128341
(43) Veröffentlichungstag der Anmeldung: 18.12.2002
(73) Patentinhaber: GRAMMER AG, 92224 Amberg (DE)
(72) Erfinder: Schneider, Franz, 92318 Neumarkt (DE); Baumer, Manfred, 92280 Kastl (DE)
(74) Vertreter: Ostriga, Sonnet, Wirths & Roche

(56) Entgegenhaltungen:
- BE-A- 382 838
- BE-A- 774 006
- DE-U- 29 507 216
- DE-U- 29 601 935
- GB-A- 691 746
- GB-A- 2 287 645

## Beschreibung

Die Erfindung betrifft einen Fahrgastsitz für ein Personenbeförderungsfahrzeug entsprechend dem Oberbegriff des Anspruchs 1.

Ein solcher Fahrgastsitz ist, zumindest was den Lehnenrahmen anlangt, in der DE 295 07 216 U1 beschrieben. Der bei dem bekannten Fahrgastsitz gegenüber dem Sitzrahmen schwenkbar angeordnete Lehnenrahmen weist ein im wesentlichen U-förmig gebogenes Rohr auf, dessen mit dem Bügelsteg versehener oberer Bereich so weit nach oben verlängert ist, dass sich eine Kopfstütze ergibt, welche in die Sitzlehne integriert ist.

An dem bekannten Lehnenrahmen sind seitlich flache, in Verstellrichtung der Rückenlehne verlaufende, Verstärkungsteile angeschweißt, welche unterhalb des Kopfstützenbereichs beginnen. Jene Verstärkungsteile weisen eine nach unten zunehmende Horizontalabmessung auf. Bedingt durch diese Verstärkung, ist der untere Teil des bekannten Lehnenrahmens relativ biegesteif und der obere Bereich des Lehnenrahmens demgegenüber leichter verformbar. Dies kann gegebenenfalls ein günstiges Verhalten bei einem Crash bedeuten, indem nämlich der obere Bereich des Lehnenrahmens schädliche Kräfte aufnehmen kann, während der untere Bereich des Lehnenrahmens weitestgehend verformungssicher ist.

Der Fahrgastsitz gemäß der DE 295 07 216 U1 wird insoweit als nachteilig empfunden, als die Anbringung der Verstärkungsteile an den Rohrrahmenteilen eine hinsichtlich der Herstellung und des Platzbedarfs relativ aufwendige Konstruktion bedeutet.

Von der GB 691 746 A ist ein Fahrgastsitz bekannt, bei welchem Lehnenrahmen und Sitzrahmen miteinander lösbar steckverbunden sind. Der Sitzrahmen besteht aus einem in einer Ebene angeordneten U-förmig gebogenen Rohr, an welches unterseitig ein Rechteckprofilrohr zur Verstärkung angeschweißt ist. Der Lehnenrahmen besteht ebenfalls aus einem U-förmig gebogenen Rohr mit einem aufrechten Bereich und zwei sich von letzterem horizontal abgebogen erstreckenden freien Rohrenden, welche in die beiden korrespondierenden freien Rohrenden des Sitzrahmens eingesteckt sind. Die Bogenbereiche der freien Lehnenrahmen-Rohrenden enthalten zudem Rohrenden zur Verstärkung. Um das Einstecken der Lehnenrahmen-Rohrenden in die Sitzrahmen-Rohrenden zu erleichtern, sind die Lehnenrahmen-Rohrenden mit mehreren umfangsverteilten Axialschlitzen versehen. Auch der Fahrgastsitz gemäß der GB 691 746 A stellt mithin eine verhältnismäßig aufwendige Konstruktion dar.

Ausgehend von dem Fahrgastsitz gemäß der DE 295 07 216 U1, liegt der Erfindung die Aufgabe zugrunde, die Merkmale des bekannten Fahrgastsitzes so umzugestalten und weiterzuentwickeln, dass diese Merkmale einen nur wenige Bauteile aufweisenden, einfach zu montierenden und herzustellenden, hinsichtlich seines Crashverhaltens günstigen und auch gegen Vandalismus relativ widerstandsfähigen Fahrgastsitz ermöglichen.

Gemeinsam mit den Merkmalen des Oberbegriffs des Anspruchs 1 wird diese Aufgabe entsprechend der Erfindung dadurch gelöst, dass der Sitzrahmen zwei voneinander distanzierte seitliche Sitzrahmenrohre aufweist, dass jedes dem Lehnenrahmen benachbarte innere Sitzrahmenrohrende mittels eines Übergangs-Rohrbogens stoffschlüssig in das Ende des jeweils zugehörigen unteren Schenkelrohrbereichs übergeht, dass jeder Übergangsrohrbogen, verglichen mit dem zugehörigen unteren Schenkelrohrbereich, eine größere Wandstärke beinhaltet, welche sich sowohl in den jeweils benachbarten unteren Schenkelrohrbereich als auch in das jeweilige seitliche Sitzrahmenrohr hineinerstreckt.

Dadurch, dass jedes von dem anderen Sitzrahmenrohr distanzierte seitliche Sitzrahmenrohr unter Einschaltung jeweils eines Übergangsrohrbogens stoffschlüssig in das Ende des jeweils zugehörigen Schenkelrohrbereichs übergeht, befasst sich die Erfindung mit einem zusammenhängenden Sitzteilrahmen, bei welchem der Lehnenrahmen nicht schwenkbar an den Sitzrahmen angeschlossen ist.

Dadurch, dass jeder Übergangsrohrbogen, verglichen mit dem zugehörigen unteren Schenkelrohrbereich, eine größere Wandstärke beinhaltet, welche sich sowohl in den jeweils benachbarten unteren Schenkelrohrbereich als auch in das jeweilige seitliche Sitzrahmenrohr zumindest hineinerstreckt, erhält der Sitzteilrahmen des erfindungsgemäßen Fahrgastsitzes eine weitestgehend verformungssteife widerstandsfähige Basis, an welche sich die Schenkelrohre anschließen, deren untere Schenkelrohrbereiche indessen ebenfalls mit der Verstärkung versehen sind.

Infolgedessen schließt sich an die verhältnismäßig biegesteifen unteren Schenkelrohrbereiche ein oberer Lehnenrahmen-Bereich an, welcher bis zu einem gewissen Maße nachgiebig ist, also bis zu einem gewissen Maße einer Beeinträchtigung durch Vandalismus ausweichen kann. Andererseits ist der obere Lehnenbereich bei einer größeren Belastung durch einen Crash in der Lage, sich bleibend zu verformen, also Energie zu verzehren.

Außerdem vermeidet die Erfindung die in der DE 295 07 216 U1 beschriebenen seitlich angeschweißten - und deshalb sehr raumaufwendigen - Verstärkungsteile, weil die erfindungsgemäße Verstärkung koaxial zum Übergangsrohrbogen vorzugsweise innen angeordnet ist. Die Erfindung kann äußerstenfalls mit einem kaum auftragenden größeren Außendurchmesser des Übergangsrohrbogens auskommen, um die größere Wandstärke zu verwirklichen.

Der Rohrbogen, welcher eine größere Wandstärke aufweist und mit dieser größeren Wandstärke zugleich in die zugeordneten Schenkelrohrbereiche und in die seitlichen Sitzrahmenrohre übergeht, kann entsprechend einer erfindungsgemäßen Ausführungsform einschließlich der von ihm beinhalteten größeren Wandstärke über seine Gesamtlänge einen einheitlichen homogenen Querschnitt aufweisen.

Diese Erfindungsmerkmale können in der Weise verwirklicht werden, dass der Übergangsbogen größerer Wandstärke jeweils mit koaxialem Übergang zwischen einem unteren Schenkelrohrbereich, letzteren teilweise mitbildend, und einem seitlichen Sitzrahmenrohr, letzteres ebenfalls teilweise mitbildend, eingeschweißt ist.

Um einen noch größeren Verformungswiderstand zu ermöglichen, sieht die Erfindung in weiterer Ausgestaltung darüber hinaus vor, dass die größere Wandstärke sich jeweils über die Gesamtlänge eines seitlichen Sitzrahmenrohres erstreckt. Auch diese Erfindungsmerkmale können wiederum mit einem Rohrabschnitt verwirklicht werden, der einen über seine Gesamtlänge ein einheitlichen homogenen Querschnitt größerer Wandstärke aufweist.

Eine besonders herstellungs- und kostengünstige alternative Ausführungsform hat die Erfindung entsprechend anderen Erfindungsmerkmalen indessen dadurch ermöglicht, dass die größere Wandstärke von einem gesonderten Innenrohrabschnitt gebildet ist, welcher jeweils in dem zugeordneten Übergangsrohrbogen angeordnet ist und welcher mit einem inneren Endbereich in das zugehörige Schenkelrohr und mit einem äußeren Endbereich in das zugehörige seitliche Sitzrahmenrohr hineinreicht.

Die Herstellung dieser besonders vorteilhaften erfindungsgemäßen Ausführungsform geschieht dabei zweckmäßig in der Weise, dass in einen geraden Rohrabschnitt, aus dem z.B. ein seitliches Sitzrahmenrohr, ein Übergangsrohrbogen, ein Schenkelrohr und eine Bügelsteg-Hälfte, also eine Sitzteil-Rahmenhälfte, zusammenhängend hergestellt werden soll, ein gerader Innenrohrabschnitt mit Spielpassung hineingesteckt, sodann lagefixiert und schließlich gemeinsam mit den übrigen Rohrbereichen zu einer endgültigen Sitzteil-Rahmenhälfte biegeverformt wird. Mit dieser gemeinsamen Biegeverformung ineinandersteckender Rohre, mit der auch eine gewisse Veränderung der Rohrquerschnittsform einhergeht, ergibt sich ein fester Verbund zwischen den äußeren Rohrbereichen und den Innenrohrabschnitten.

Eine Variante der Erfindung besteht darin, dass der den Lehnenrahmen, die beiden Übergangsrohrbögen und den Sitzrahmen aufweisende Sitzteilrahmen aus zwei in der Mitte des Bügelstegs aneinander befestigten Sitzteil-Rahmenhälften zusammengesetzt ist.

Eine herstellungsgünstige widerstandsfähige Ausführungsform entsprechend der Erfindung kennzeichnet sich dadurch, dass jede Sitzteil-Rahmenhälfte für sich betrachtet oder der gesamte Sitzteilrahmen jeweils aus einem zusammenhängenden Rohrabschnitt mit einheitlichem Querschnitt hergestellt ist.

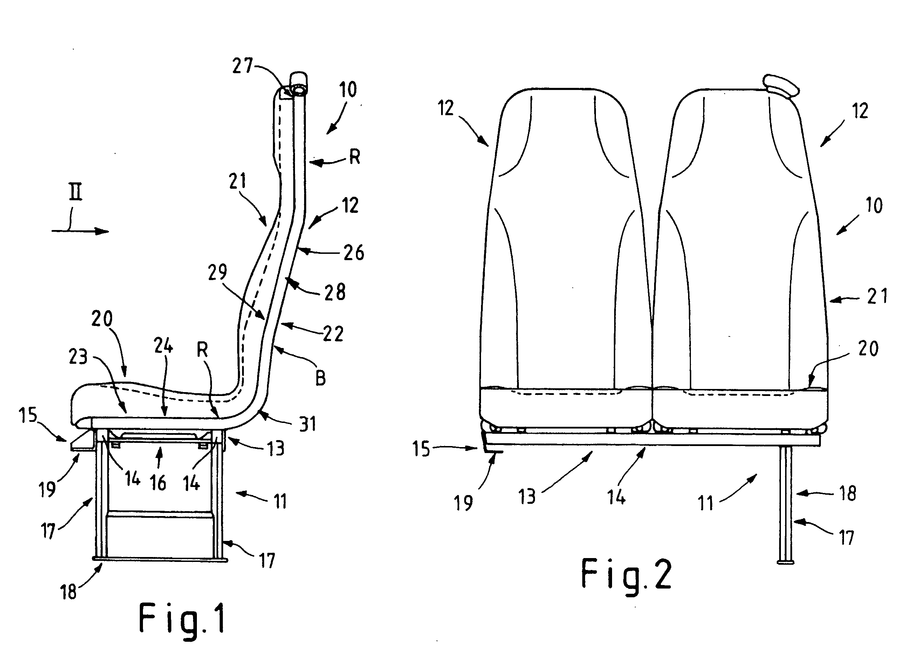

In den Zeichnungen ist ein bevorzugtes Ausführungsbeispiel entsprechend der Erfindung dargestellt, es zeigt
Fig. 1 eine zwei Sitzteile aufweisende Fahrgastsitzgruppe für ein Nahverkehrsfahrzeug, wie z.B. für einen Straßen- oder S-Bahnwagen,
Fig. 2 die Sitzgruppe gemäß Fig. 1 in Ansicht entsprechend dem in Fig. 1 mit II gekennzeichneten Sichtpfeil,

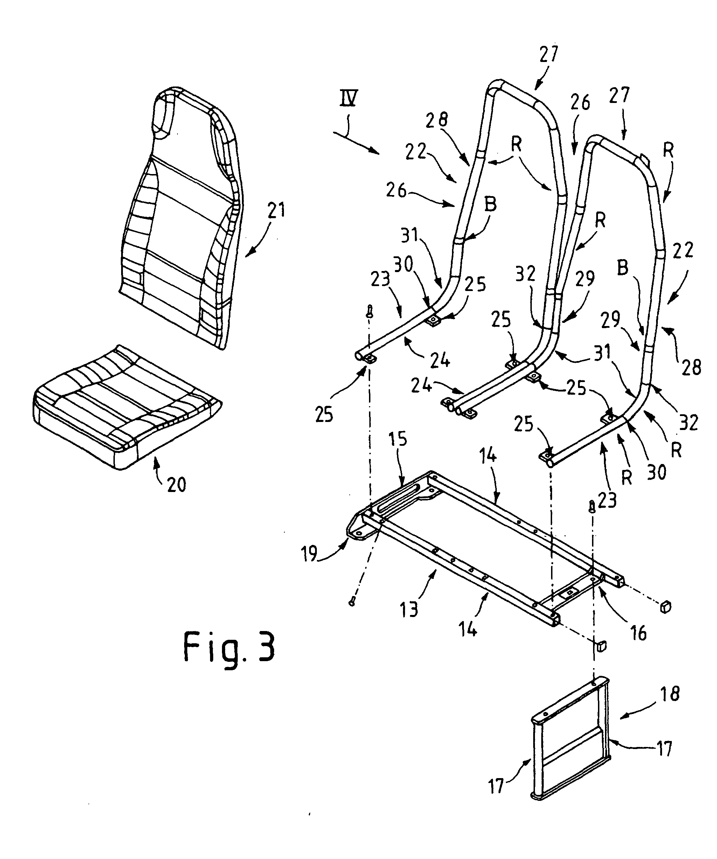

Fig. 3 eine auseinandergezogene räumliche Darstellung zur Verdeutlichung des konstruktiven Aufbaus der in den Fig. 1 und 2 dargestellten Sitzgruppe,
Fig. 4 eine Seitenansicht des Sitzrahmens entsprechend dem in Fig. 3 mit IV bezeichneten Sichtpfeil und
Fig. 5 einen Querschnitt entsprechend der in Fig. 4 mit V-V bezeichneten Schnittlinie.

Ein als Doppelsitz ausgebildeter Fahrgastsitz 10, der z.B. für einen Nahschnellverkehrszug bestimmt ist, weist einen fahrzeugseitig befestigbaren Unterbau 11 und zwei auf dem Unterbau 11 befestigte, mit einer Polsterung versehene, Sitzteile 12 auf.

Der Unterbau 11 besitzt einen im wesentlichen horizontal zu positionierenden Tragrahmen 13 von etwa rechteckiger Grundform, der aus zwei Vierkantrohr-Trägern 14 und aus zwei letztere miteinander verbindenden Streben 15, 16 zusammengesetzt ist.

Der Unterbau 11 verfügt zudem über einen zwei Stützen 17 aufweisenden Stützfuß 18 zur einseitigen Befestigung des Fahrgastsitzes 10 auf dem nicht dargestellten Fahrzeugboden. An der anderen Seite des Fahrgastsitzes 10 dient ein Stützflansch 19 der Strebe 15 der Befestigung des Unterbaus 11 auf einer nicht gezeigten fahrzeugseitigen Befestigungsstruktur.

Jedes Sitzteil 12 ist mit einer Sitzpolsterschale 20 und mit einer Lehnenpolsterschale 21 versehen. Die Sitzpolsterschale 20 ist an einem Sitzrahmen 23 befestigt, welcher praktisch nur aus zwei voneinander distanzierten seitlichen Sitzrahmenrohren 24 besteht, die mittels Befestigungslaschen 25 an den beiden Vierkant-Rohrträgern 14 des Unterbaus 11 verschraubt sind.

Die Lehnenpolsterschale 21 wird jeweils an einem U-förmigen Lehnenrahmen 26 befestigt, der einen Bügelsteg 27 und zwei vom Bügelsteg 27 nach unten zum Sitzrahmen 23 hin weisende Schenkelrohre 28 aufweist, deren untere Schenkelrohrbereiche jeweils mit 29 bezeichnet sind.

Sitzrahmen 23 und Lehnenrahmen 26 bilden zusammen den Sitzteilrahmen 22.

Jedes innere Sitzrahmenrohrende 30 ist mittels eines Übergangsrohrbogens 31 mit dem Ende 32 des jeweils zugehörigen unteren Schenkelrohrbereichs 29 stoffschlüssig verbunden.

Die beiden Sitzrahmenrohre 24, die beiden Übergangsrohrbögen 31, die beiden Schenkelrohre 28 und der Bügelsteg 27 sind gemeinsam aus einem zusammenhängenden Rohr R gebogen, welches einen einheitlichen kreisförmigen Rohrquerschnitt aufweist.

Obwohl die Erfindung einen kreisförmigen Querschnitt bevorzugt sollen andere Rohrquerschnitte, wie z.B. Oval- oder Rechteckprofile, nicht ausgeschlossen sein, wenn besondere Anwendungsfälle dieses erfordern.

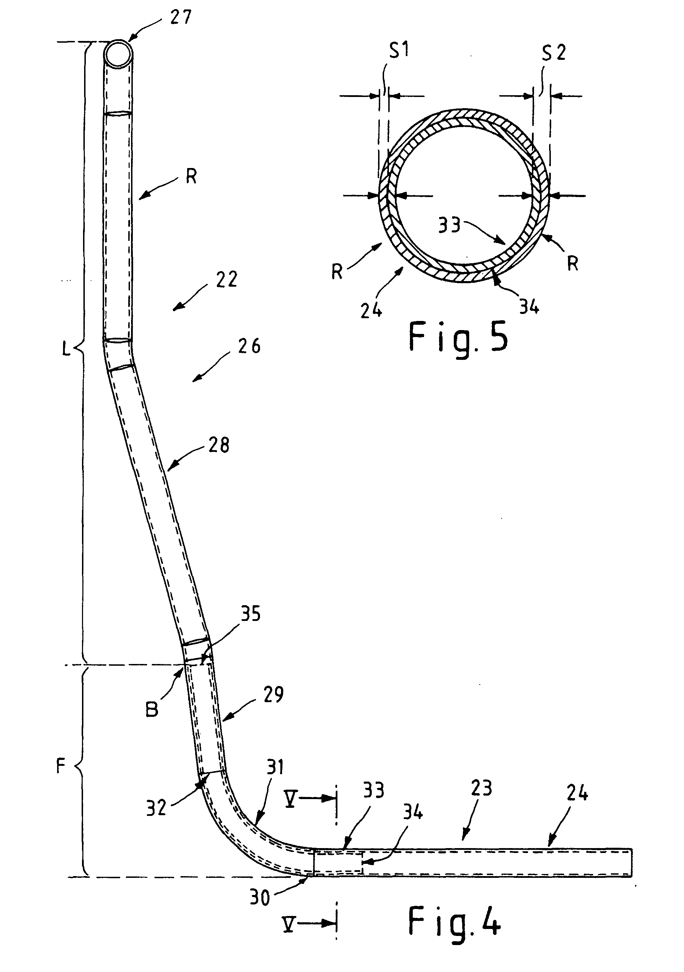

Anhand der vergrößerten Darstellung einer Seitenansicht des Sitzteilrahmens 22 gemäß Fig. 4 und anhand des Querschnitts gemäß Fig. 5 soll gezeigt werden, dass in dem jeweiligen Übergangsrohrbogen 31 und in den ihm beidendig benachbarten Bereichen des Schenkelrohres 28 und des seitlichen Sitzrahmenrohres 24 ein Innenrohrabschnitt 33 steckt.

Die Herstellung des gesamten Sitzteilrahmens 22 geht wie folgt vonstatten:

Zunächst wird eine der Gesamtlänge des Sitzteilrahmens 22 entsprechende gerade Rohrlänge (Rohrwandstärke ca. 2mm) abgelängt. Sodann wird aus dieser geraden Rohrlänge der obere Bereich des Sitzteilrahmens 22 biegeverformt, und zwar bis zu den mit B bezeichneten Biegestellen. Die unterhalb der Biegestellen B verbleibenden beiden Enden des Rohres R bleiben also zunächst gerade, so dass die Möglichkeit besteht, die sich zunächst ebenfalls geradlinig erstreckenden beiden Innenrohrabschnitte 33 (Rohrwandstärke 2 mm) jeweils bis zu den Biegestellen B vorzuschieben. Dabei verklemmen sich die Stirnseiten der inneren Endbereiche 35 der Innenrohrabschnitte 33 an den Biegestellen B.

Daraufhin erfolgt der abschließende Biegevorgang, in welchem eine gemeinsame Biegeverformung der beiden Restlängen des Rohres R und der beiden Innenrohrabschnitte 33 erfolgt. Durch den Biegevorgang bedingt ist eine gewisse Querschnittsverformung beider ineinander steckender Rohrabschnitte, die daraufhin einen festen Sitz miteinander eingehen. Nach Beendigung jenes Biegevorganges ist jeder Innenrohrabschnitt 33 im Übergangsrohrbogen 31 festgelegt. Dabei ragt jeder Innenrohrabschnitt 31 mit seinem inneren Endbereich 35 in ein Schenkelrohr 28, und zwar in dessen unteren Schenkelrohrabschnitt 29, und mit seinem äußeren Endbereich 34 in ein seitliches Sitzrahmenrohr 24 hinein.

Bei Betrachtung der Fig. 5 wird deutlich, dass der Sitzteilrahmen 22 einen gegen Verformung relativ widerstandsfähigen unteren Bereich B und einen leichter verformbaren oberen Bereich L gestattet.

In Fig. 5 sind die einfache Rohrwandstärke (z.B. 2 mm) mit S1 und zweifache Rohrwandstärke (4 mm) mit S2 bezeichnet. In den Überlappungszonen bei 29, 35, bei 31, 33 sowie bei 23, 34 ist demnach die doppelte Rohrwandstärke S2 vorhanden.

## Patentansprüche

1. Fahrgastsitz (10) für ein Personenbeförderungsfahrzeug, mit einem fahrzeugseitig befestigbaren Unterbau (11) und mit mindestens einem auf dem Unterbau (11) gehaltenen, mit einer Polsterung (20, 21) versehenen Sitzteil (12), welches einen Sitzteilrahmen (22) besitzt, der einen Sitzrahmen (23) und einen aus mindestens einem Rohr (R) gebildeten U-bügelförmigen Lehnenrahmen (26) aufweist, dessen von seinem Bügelsteg (27) nach unten zum Sitzrahmen (23) weisende Schenkelrohre (28) mindestens mittelbar am Sitzrahmen (23) befestigt und zur Erhöhung der Biegesteifigkeit ihrer unteren Schenkelrohrbereiche (29) jeweils mit einer Verstärkung (33, 35) versehen sind, **dadurch gekennzeichnet, dass** der Sitzrahmen (23) zwei voneinander distanzierte seitliche Sitzrahmenrohre (24) aufweist, dass jedes dem Lehnenrahmen (26) benachbarte innere Sitzrahmenrohrende (30) mittels eines Übergangsrohrbogens (31) stoffschlüssig in das Ende (32) des jeweils zugehörigen unteren Schenkelrohrbereichs (29) übergeht, dass jeder Übergangsrohrbogen (31), verglichen mit dem zugehörigen unteren Schenkelrohrbereich (29), eine größere Wandstärke (S2) beinhaltet, welche sich sowohl in den jeweils benachbarten unteren Schenkelrohrbereich (29) als auch in das jeweilige seitliche Sitzrahmenrohr (24) zumindest hineinerstreckt.

2. Fahrgastsitz nach Anspruch 1, **dadurch gekennzeichnet, dass** jeder Rohrbogen (31) einschließlich der von ihm beinhalteten größeren Wandstärke über seine Gesamtlänge einen einheitlichen homogenen Querschnitt aufweist.

3. Fahrgastsitz nach Anspruch 1 oder nach Anspruch 2, **dadurch gekennzeichnet, dass** sich die größere Wandstärke (S2) jeweils über die Gesamtlänge eines seitlichen Sitzrahmenrohres (24) erstreckt.

4. Fahrgastsitz nach einem der Ansprüche 1 bis 3, **dadurch gekennzeichnet, dass** die größere Wandstärke (S2) von einem gesonderten Innenrohrabschnitt (33) gebildet ist, welcher jeweils in dem zugeordneten Übergangsrohrbogen (31) angeordnet ist und welcher mit einem inneren Endbereich (35) in das zugehörigen Schenkelrohr (28) und mit einem äußeren Endbereich (34) in das zugeordnete seitliche Sitzrahmenrohr (24) hineinreicht.

5. Fahrgastsitz nach einem der Ansprüche 1 bis 4, **dadurch gekennzeichnet, dass** der den Lehnenrahmen (26), die beiden Übergangsrohrbögen (31) und den Sitzrahmen (23) aufweisende Sitzteilrahmen (22) aus zwei in der Mitte des Bügelstegs (27) aneinander befestigten Sitzteil-Rahmenhälften zusammengesetzt ist.

6. Fahrgastsitz nach Anspruch 4 oder nach Anspruch 5, **dadurch gekennzeichnet, dass** jede Sitzteil-Rahmenhälfte für sich betrachtet oder der gesamte Sitzteilrahmen (22) jeweils aus einem zusammenhängenden Rohrabschnitt (R) mit einheitlichem Querschnitt hergestellt ist.

## Claims

1. Passenger seat (10) for a passenger transport vehicle, having a substructure (11) which can be fastened to the vehicle, and having at least one seat part (12) which is held on the substructure (11), is provided with upholstery (20, 21) and has a seat frame part (22) comprising a seat frame (23) and a U-shaped backrest frame (26) which is formed from at least one tube (R) and of which the limb tubes (28), pointing downwards from its bow-shaped connecting part (27) towards the seat frame (23) are fastened at least indirectly to the seat frame (23) and are each provided with a reinforcement (33, 35) to increase the resistance to bending of their lower limb-tube regions (29), **characterised in that** the seat frame (23) has two spaced-apart lateral seat frame tubes (24), **in that** each inner seat frame tube end (30) adjacent to the backrest frame (26) merges in a materially united manner into the end (32) of the respectively associated lower limb-tube region (29) by means of a transition tube bend (31), **in that** each transition tube bend (31) comprises, compared with the associated lower limb-tube region (29), a greater wall thickness (S2) which extends at least both into the respectively adjacent lower limb-tube region (29) and into the respective lateral seat frame tube (24).

2. Passenger seat according to Claim 1, **characterised in that** each tube bend (31), including the greater wall thickness that it comprises, has a uniform homogeneous cross-section over its entire length.

3. Passenger seat according to Claim 1 or according to Claim 2, **characterised in that** the greater wall thickness (S2) extends in each case over the entire length of a lateral seat frame tube (24).

4. Passenger seat according to one of Claims 1 to 3, **characterised in that** the greater wall thickness (S2) is formed by a separate inner tube portion (33) which is arranged in each case in the assigned transition tube bend (31) and which reaches by an inner end region (35) into the associated limb tube (28) and by an outer end region (34) into the assigned lateral seat frame tube (24).

5. Passenger seat according to one of Claims 1 to 4, **characterised in that** the seat part frame (22) having the backrest frame (26), the two transition tube bends (31) and the seat frame (23) is composed of two seat part frame halves fastened to one another at the centre of the bow-shaped connecting part (27).

6. Passenger seat according to Claim 4 or according to Claim 5, **characterised in that** each seat part frame half considered by itself or the complete seat part frame (22) is in each case produced from a continuous tube portion (R) of uniform cross-section.

## Revendications

1. Siège de passager (10) pour véhicule de transport en commun, avec une substructure (11) susceptible d'être fixée côté véhicule et avec au moins une partie siège (12) maintenue sur la substructure (11), munie d'un rembourrage (20, 21), partie siège comprenant un cadre de partie siège (22) présentant un cadre d'assise (23) et un cadre de dossier (26) en forme d'étrier en U formé au moins d'un tube (R), cadre de dossier dont des tubes de branche (28), tournés vers le bas, en direction du cadre d'assise (23), depuis sa nervure d'étrier (27), sont fixés, au moins indirectement, sur le cadre d'assise (23) et sont chacun munis d'un renforcement (33,35), dans le but d'augmenter la rigidité en flexion de ses zones de tube de branche inférieure (29) **caractérisé en ce que** le cadre d'assise (23) présente deux tubes de cadre d'assise (24) latéraux, espacés l'un de l'autre, **en ce que** chaque extrémité de tube de cadre d'assise intérieure (30) voisine du cadre de dossier (26) se transforme, au moyen d'un coude de tube de transition (31), par une liaison par la matière, en l'extrémité (32) de chaque fois la zone de tube de branche inférieure (29) afférente, **en ce que** chaque coude de tube de transition (31), en comparaison de la zone de tube de branche inférieure (29) afférente, présente une épaisseur de paroi (S2) plus grande, qui s'étend, tant dans la zone de tube de branche inférieure (29) chaque fois voisine, qu'également dans le tube de cadre d'assise latéral (24) respectif.

2. Siège de passager selon la revendication 1, **caractérisé en ce** chaque coude de tube (31), y compris l'épaisseur de paroi plus grande contenue par lui, présente une section transversale unitaire homogène sur toute sa longueur.

3. Siège pour passager selon la revendication 1 ou selon la revendication 2, **caractérisé en ce que** l'épaisseur de paroi (S2) plus grande s'étend chaque fois sur la longueur totale d'un tube de cadre d'assise latérale (24).

4. Siège pour passager selon l'une des revendications 1 à 3, **caractérisé en ce que** l'épaisseur de paroi (S2) plus grande est formée par un tronçon de tube intérieur (33) séparé, disposé chaque fois dans le coude de tube de transition (31) associé et qui, par une zone d'extrémité intérieure (35), va jusque dans le tube de branche (28) afférent et, par une zone d'extrémité extérieure (34), va dans le tube de cadre d'assise latéral (24) associé.

5. Siège pour passager selon l'une des revendications 1 à 4, **caractérisé en ce que** le cadre de partie siège (22), présentant le cadre de dossier (26), les deux coudes de tube de transition (31) et le cadre d'assise (23), est composé de deux moitiés de cadre de partie siège (22), fixées l'une sur l'autre au centre de la nervure d'étrier (27).

6. Siège de passager selon la revendication 4 ou la revendication 5, **caractérisé en ce que** chaque moitié de cadre de partie siège considérée en soi, ou bien l'ensemble du cadre de partie siège (22), est respectivement fabriqué à partir d'un tronçon de tube (R) en cohésion, ayant une section transversale unitaire.
